# NEUE EUROPÄISCHE PATENTSCHRIFT

(11) **EP 0 820 490 B2**
(45) Veröffentlichungstag und Bekanntmachung des Hinweises auf die Entscheidung über den Einspruch: **29.10.2003**
(45) Hinweis auf die Patenterteilung: 07.07.1999
(21) Anmeldenummer: 96910953.7
(22) Anmeldetag: 04.04.1996
(51) Int. Cl.: C09D 133/06, C08G 59/32, C09D 5/03

(54) **WÄSSRIGE PULVERKLARLACK-DISPERSION**
AQUEOUS DISPERSION OF A TRANSPARENT COATING POWDER
DISPERSION AQUEUSE DE VERNIS EN POUDRE

(30) Priorität: 10.04.1995 US 419296
(43) Veröffentlichungstag der Anmeldung: 28.01.1998
(73) Patentinhaber: BASF Coatings Aktiengesellschaft, 48165 Münster (DE)
(72) Erfinder: SACHARSKI, Lawrence, Eastpointe, MI 48201 (US); WOLTERING, Joachim, D-48159 Münster (DE); CLARK, Peter, Hartland, MI 48353 (US); WONNEMANN, Heinrich, D-48291 Telgte (DE)
(74) Vertreter: Fitzner, Uwe, Dr.
(86) Internationale Anmeldenummer: EP9601480
(87) Internationale Veröffentlichungsnummer: WO96032452

(56) Entgegenhaltungen:
- US-A- 4 137 349
- US-A- 4 385 138
- US-A- 4 476 271
- US-A- 5 270 416
- US-A- 5 378 756
- CHEMICAL ABSTRACTS, Bd. 88, Nr. 2, 09 Januar 1978, Columbus, Ohio, US; Zusammenfassung Nr. 8608S, SAKAKIBARA: 'Formation of thin coatings' Seite 86; XP002009613 & JP 52 078 939 A (DAINIPPON TORYO CO. LTD.) 02 Juli 1977
- CHEMICAL ABSTRACTS, Bd. 85, Nr. 24, 13 Dezember 1976, Columbus, Ohio, US; Zusammenfassung Nr. 179111S, SAKAE N.: 'Abrasive polishing of coating films' Seite 81; XP002009614 & JP 51 096 835 A (DAI NIPPON TORYO CO. LTD.) 25 August 1976

## Beschreibung

Die vorliegende Erfindung betrifft eine wäßrige-Pulverklarlack-Dispersion, die sich insbesondere als Überzug für mit Wasserbasislack beschichtete Automobilkarosserien eignet.

Für die Beschichtung von Automobllkarosserien werden heute vorzugsweise Flüssiglacke verwendet. Diese verursachen zahlreiche Umweltprobleme aufgrund Ihres Lösemittelgehaltes. Dies gilt auch für die Fälle des Einsatzes von Wasserlacken.

Aus diesem Grund sind in den letzten Jahren vermehrte Anstrengungen unternommen worden, für die Beschichtung Pulverlacke zu verwenden. Die Ergebnisse sind jedoch bisher nicht zufriedenstellend, insbesondere sind zur Erzielung eines gleichmäßigen Aussehens erhöhte Schichtdicken erforderlich. Auf der anderen Seite bedingt der Einsatz von pulverförmigen Lacken eine andere Applikationstechnologie. Die für Flüssiglacke ausgelegten Anlagen können daher hierfür nicht verwendet werden. Daher ist man bestrebt, Pulverlacke in Form wäßriger Dispersionen zu entwickeln, die sich mit Flüssiglacktechnologien verarbeiten lassen.

Aus der US-A-4268542 ist beispielsweise ein Verfahren bekannt, bei dem eine Pulveriack-Slurry verwendet wird, die sich für die Beschichtung von Automobilen eignet. Hierbei wird zunächst eine herkömmliche Pulverschicht auf die Karosserie aufgetragen und als zweite Schicht die Klarlack-Slurry. Bei dieser Klarlack-Slurry auf Basis von Acrylatharzen werden ionische Verdicker verwendet, welche zu einer relativ hohen Empfindlichkeit der applizierten Lackschicht gegen Feuchtigkeit, insbesondere gegen Schwitzwasser, führen. Ferner weisen diese in einem der Beispiele einen Gehalt von 0,5 bis 30 % an glycidylhaltigen Monomeren auf. Zudem muß mit hohen Einbrenntemperaturen (über 160°C) gearbeitet werden.

Aus der US-A-4137349 ist ebenfalls eine Pulverlack-Slurry bekannt. Diese ist jedoch nicht geeignet, um mittels der aus der Flüssiglacktechnologie bekannten Methoden aufgetragen werden zu können.

Im folgenden wird der Begriff Pulverklarlack-Dispersion als Synonym für Pulverklarlack verwendet.

Die vorliegende Erfindung hat sich nunmehr die Aufgabe gestellt, eine wäßrige Pulverklarlack-Dispersion zur Verfügung zu stellen, die sich mit der bisherigen Flüssiglacktechnologie auf Automobilkarosserien auftragen läßt und insbesondere bereits bei Temperaturen von 130°C einbrennbar ist sowie zu einer hohen Resistenz gegen Feuchtigkeit, insbesondere gegen Schwitzwasser, bei der applizierten Lackschicht führt.

Gegenstand der Erfindung ist demgemäß eine wäßrige Pulverklarlackdispersion aus
einer festen, pulverförmigen Komponente A und einer wäßrigen Komponente B, wobei
Komponente A ein Pulverklarlack ist, enthaltend
a) wenigstens ein epoxidhaltiges Bindemittel mit einem Gehalt von 30 bis 45 %, vorzugsweise 30 bis 35 % an glycidylhaltigen Monomeren mit einem Gehalt an vinylaromatischen Verbindungen, vorzugsweise Styrol,
b) wenigstens ein Vernetzungsmittel, und
c) ggf. Katalysatoren, Hilfsstoffe, pulvsrklarlacktypische Additive, wie Entgasungsmittel, Verlaufsmittel, UV-Absorber, Radikalfänger, Antioxidantien
und
Komponente B. eine wäßrige Dispersion ist, enthaltend
a) wenigstens einen Verdicker und
b) ggf. Katalysatoren, Hilfsstoffe, Entschäumungsmittel, Netzmittel, Dispersionshilfsmittel, vorzugsweise carboxyfunktionelle Dispergiermittel, Antioxidantien, UV-Absorber, Radikalfänger, geringe Mengen Lösemittel, Verlaufsmittel, Biozide, Neutralisationsmittel, vorzugsweise Amine und/oder Wasserrückhaltemittel.

Die Aufgabe der Erfindung wird dadurch gelöst, daß die Vernetzungsmittel geradkettige, aliphatische Dicarbonsäuren und/oder carboxyfunktionelle Polyester sind und Komponente Ba) ein nicht-ionischer Assoziativ-Verdicker ist.
Strukturmerkmale solcher Assoziativ-Verdicker
a) sind:
   aa) ein hydrophiles Gerüst, das eine ausreichende Wasserlöslichkeit sicherstellt und
   ab) hydrophobe Gruppen, die zu einer assoziativen Wechselwirkung im wäßrigen Medium fähig sind.

Als epoxifunktionelles Bindemittel für den festen Pulverklarlack, der zur Herstellung der Dispersion verwendet wird, sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure Ist. Derartige epoxidgruppenhaltige Polyacrylatharze sind z.B.bekannt aus EP-A-299 420, DE-B-22 14 650, DE-B-27 49 576, US-A-4,091,048 und US-A-3,781,379.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgrupperihaltige Monomere, wie z.B. Hydroxyethylacrylat und Hydroxyethylmethacrylat.

Die in den epoxidfunktionellen Bindemitteln eingesetzten epoxidfunktionellen Monomere sind vorzugsweise Glycidylacrylat, Glycidylmethacrylat und Allylglycidylether.

Das epoxidgruppenhaltige Polyacrylatharz weist üblicherweise ein Epoxidäquivalentgewicht von 400 bis 2500, vorzugswelse 420 bis 700, ein zahlenmittleres Molekulargewicht (gelpermeationschromatographlsch unter Verwendung eines Polystyrolstandards bestimmt) von 2.000 bis 20.000, vorzugsweise von 3.000 bis 10.000, und eine Glasübergangstemperatur (TG) von 30 bis 80, vorzugsweise von 40 bis 70, besonders bevorzugt von 40 bis 60°C auf (gemessen mit Hilfe der Differential Scanning Calorimetrie (DSC)). Ganz besonders bevorzugt werden ca 50°C. Zum Einsatz können auch Gemische aus zwei oder mehr Acrylatharzen kommen.

Das epoxidgruppenhaltige Polyacrylatharz kann nach aligemein gut bekannten Methoden durch Polymerisation hergestellt werden.

Als Vernetzer sind Carbonsäuren, insbesondere gesättigte, geradkettige, aliphatische Dicarbonsäuren mit 3 bis 20 C-Atomen im Molekül geeignet. Ganz besonders bevorzugt wird Dodecan-1,12-dicarbonsäure eingesetzt. Zur Modifizierung der Eigenschaften derfertigen Pulvarklarlacke können ggf. noch andere Carboxylgruppen enthaltende Vernetzer eingesetzt werden. Als Beispiele hierfür seien gesättigte verzweigte oder ungesättigte geradkettige Di- und Polycarbonsäuren sowie Polymere mit Carboxylgruppen genannt.

Ferner sind auch Pulverklarlacke geeignet, die einen epoxifunktionellen Vernetzer und ein säurefunktionelles Bindemittel enthalten.

Als säurefunktionelles Bindemittel sind beispielsweise saure Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Das epoxidgruppenhaltige Bindemittel bzw. der carboxylgruppenhaltige Vernetzer und das Carboxyl- bzw. das Bindemittel werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOH-Lösung ermittelt werden.

Endungsgemäß enthält das Bindemittel vinylaromatische Verbindungen, insbesondere Styrol. Um die Gefahr der Rißbildung zu begrenzen, liegt der Gehalt jedoch nicht über 35 Gew.-%. Bevorzugt werden 10 bis 25 Gew.-%.

Die festen Pulverlacke enthalten ggf.einen oder mehrere geeignete Katalysatoren für die Epoxidharz-Aushärtung. Geeignete Katalysatoren sind Phosphoniumsalze organischer oder anorganischer Säuren, quartemäre Ammoniumverbindungen Amine, Imidazol und Imidazolderivate. Die Katalysatoren werden im allgemeinen in Anteilen von 0,001 Gew.-% bis etwa 2 Gew.-%, bezogen auf das Gesamtgewicht des Epoxidharzes und des Vemetzungsmittels, eingesetzt.

Beispiele für geeignete Phosphonium-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium-Katalysatoren sind z.B. beschrieben in US-A-3,477,990 und US-A-3,341,580.

Geeignete Imidazol-Katalysatoren sind beispielsweise 2-Styrylimidazol, 1 -Benzyl-2-methylimidazol, 2-Methylimidazol und 2-Butylimidazol. Diese sowie weitere Imidazol-Katalysatoren sind z. B. beschrieben in dem belgischen Patent Nr. 756,693.

Außerdem können die festen Pulverlacke ggf. noch Hilfsmittel und Additive enthalten. Beispiele hierfür sind Verlaufsmittel, Antioxidantien, UV-Absorber, Radikalfänger, Rieselhilfen und Entgasungsmittel, wie beispielsweise Benzoin.

Die Herstellung der festen Pulverlacke erfolgt nach bekannten Methoden (vgl. z,.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben für die Dispergierung vorbereitet.

Aus dem Pulver kann anschließend durch Naßvermahlung oder durch Einrühren von trocken vermahlenem Pulverlack die wäßrige Pulverklarlackdispersion hergestellt werden. Besonders bevorzugt wird die Naßvermahlung.

Die vorliegende Erfindung betrifft demgemäß auch ein Verfahren zur Herstellung einer wäßrigen Pulverlackdispersion, wobei
I. aus einer festen, pulverförmigen Komponente A und einer wäßrigen Komponente B eine Dispersion hergestellt wird, wobei
   die Komponente A ein Pulverklarlack ist, enthaltend
   a) wenigstens ein epoxidhaltiges Bindemittel mit einem Gehalt von 30 bis 45 Gew.%, vorzugsweise 30 bis 35 Gew.% an glycidylhaltigen Monomeren mit einem Gehalt an vinylaromatischen Verbindungen, vorzugsweise Styrol,
   b) wenigstens ein Vernetzungsmittel, und
   c) ggfs. Katalysatoren, Hilfsstoffe, pulverklarlacktypische Additive, wie Entgasungsmittel, Verlaufsmittel, UV-Absorber, Radikalfänger, Antioxidantien
   und
   die Komponente B eine wäßrige Dispersion ist, enthaltend
   a) wenigstens einen Verdicker und
   b) ggf. Katalysatoren, Hilfsstoffe, Entschäumungsmittel. Dispersionshilfsmittel, Netzmittel, vorzugsweise carboxyfunktionelle Dispergiermittel, Antioxidantien, UV-Absorber, Verlaufhilfsmittel, Neutralisationsmittel, vorzugsweise Amine. Radikalfänger, geringe Mengen Lösemittel, Biozlde und/oder Wasserrückhaltemittel,
   wobei als Vernetzungsmittel geradkettige, aliphatische Dicarbonsäuren und/oder carboxyfunktionelle Polyester und als Komponente Ba) ein nicht-ionischer Verdicker eingesetzt wird,
II. die aus den Komponenten A und B hergestellte Dispersion ggf. vermahlen wird,
III. der pH-Wert der Dispersion auf 4,0 bis 7,0, vorzugsweise 5,5 bis 6,5 eingestellt und filtriert wird.

Als hydrophobe Gruppen werden beispielsweise langkettige Alkylreste, wie z.B. Dodecyl-, Hexadecyl- oder Octadecyl-Reste, oder Alkarylreste, wie z.B. Octylphenyl- oder Nonylphenyl-Reste eingesetzt.

Als hydrophile Gerüste werden vorzugsweise Polyacrylate, Celluloseether oder besonders bevorzugt Polyurethane eingesetzt, die die hydrophoben Gruppen als Polymerbausteine enthalten.
Ganz besonders bevorzugt sind als hydrophile Gerüste Polyurethane, die Polyetherketten als Bausteine enthalten, vorzugsweise aus Polyethylenoxid. Bei der Synthese solcher Polyetherpolyurethane dienen die Di- und oder Polyisocyanate, bevorzugt aliphatische Diisocyanate, besonders bevorzugt ggf. alkylsubstituiertes 1,6-Hexamethylendiisocyanat, zur Verknüpfung der Hydroxylgruppen-terminierten Polyetherbausteine untereineinander und zur Verknüpfung der Polyetherbausteine mit den hydrophoben Endgruppenbausteinen, die beispielsweise monofunktionelle Alkohole und/oder Amine mit den schon genannten langkettigen Alkylresten oder Aralkylresten sein können.

Nach der Dispergierung der Komponente A in der Komponente B.wird ggf.vermahlen, der pH-Wert auf 4,0 bis 7,0, vorzugsweise 5,5 bis 6,5 eingestellt und filtriert.

Die mittlere Korngröße liegt zwischen 1 und 25 µm, vorzugsweise unter 20 µm, besonders bevorzugt bei 3 bis 10 µm. Der Festkörpergehalt der wäßrigen Pulverklarlackdispersion liegt zwischen 15 und 50 %.

Der Dispersion können vor oder nach der Naßvermahlung bzw. dem Eintragen des trockenen Pulverlackes in das Wasser 0 bis 5 Gew. % eines Entschäumergemisches, eines Ammonlum- und/oder Alkalisalzes, eines carboxylfunktionellen oder nichtionischen Dispergierhilfsmittels, Netzmittels und/oder Verdickergemischss sowie der anderen Additive zugesetzt werden. Vorzugsweise werden erfindungsgemäß Entschäumer, Dispergierhilfs-, Netz- und/oder Verdikkungsmittel zunächst in Wasser dispergiert. Dann werden kleine Portionen des Pulverklarlackes eingerührt. Anschließend werden noch einmal Entschäumer, Dispergierhilfs-, Verdickungs- und Netzmittel eindispergiert. Abschließend werden nochmals in kleinen Portionen Pulverklarlacke eingerührt.

Die Einstellung des pH-Wertes erfolgt erfindungsgemäß vorzugsweise mit Ammoniak oder Aminen, Der pH-Wert kann hierbei zunächst ansteigen, daß eine stark basische Dispersion entsteht. Der pH-Wert fällt jedoch innerhalb mehrerer Stunden oder Tage wieder auf die oben angeführten Werte.

Die erfindungsgemäße Pulverklarlackdispersion läßt sich als Überzug von Basislacken, vorzugsweise in der Automobilindustrie, verwenden. Besonders geeignet ist die Klarlackdispersion für Wasserbasislakke auf Basis eines Polyesters, Polyurethanharzes und eines Aminoplastharzes.

Die erfindungsgamäßen Pulverklarlackdispersionen lassen sich mit den aus der Flüssiglacktechnologie bekannten Methoden aufbringen. Insbesondere können sie mittels Spritzvertahren aufgebracht werden.
Ebenso kommen elektrostatisch unterstützte Hochrotation oder pneumatische Applikation in Betracht.

Gegenstand der Erfindung ist demgemäß die Verwendung der beschriebenen wäßrigen Pulverlackdispersion zur Beschichtung von lackierten und nicht lakkierten Automobilkarosserien aus Metallblech und/oder Kunststoff mittels elektrostatisch unterstützter Hochrotation oder pneumatischer Applikation.

Die auf die Basislackschicht aufgebrachten Pulverklarlackdispersionen werden regelmäßig vor dem Einbrennen abgelüftet. Dies geschieht zweckmäßigerweise zunächst bei Raumtemperatur und anschließend bei leicht erhöhter Temperatur. In der Ragel beträgt die erhöhte Temperatur 40 bis 70°C, vorzugsweise 50 bis 65°C. Das Ablüften wird für 2 bis 10 Minuten, vorzugsweise 4 bis 8 Minuten bei Raumtemperatur durchgeführt. Bei erhöhter Temperatur wird nochmals während derselben Zeitspanne abgelüftet.

Das Einbrennen kann bereits bei Temperaturen von 130°C durchgeführt werden. Durchführbar ist das Einbrennen bei 130 bis 180°C, vorzugsweise 135 bis 155°C.

Mit dem erfindungsgemäßen Verfahren können Schichtdicken von 30 bis 50, vorzugsweise 35 bis 45 µm erreicht werden. Klarlacke mit vergleichbarer Qualität konnten bisher nach dem Stand der Technik unter Einsatz von Pulverklarlacken nur durch Auftrag von Schichtdicken von 65 bis 80 µm erreicht werden.

Im folgenden wird die Erfindung unter Bezugnahme auf die Beispiele näher beschrieben:
1. Herstellung des Acrylatharzes
   21,1 Teile Xylol werden vorgelegt und auf 130°C erwärmt. Zu der Vorlage werden bei 130°C binnen 4 h über zwei getrennte Zulaufbehälter Initiator: 4,5 Teile TBPEH (tert.-Butylperethylhexanoat) gemischt mit 4,86 Teilen Xylol und Monomere: 10,78 Teile Methylmethacrylat, 25,5 Teile n-Butylmethacrylat, 17,39 Teile Styrol und 23,95 Teile Glycidylmethacrylat zudosiert. Anschließend wird auf 180°C erwärmt und im Vakuum < 100 mbar das Lösemittel abgezogen.
2. Herstellung des Pulverklarlacks
   77,5 Teile Acrylatharz, 18,8 Teile Dodecandicarbonsäure (s. Härter), 2 Teile Tinuvin 1130 (UV-Absorber), 0,9 Teile Tinuvin 144 (HALS), 0,4 Teile Additol XL 490 (Verlaufsmittel) und 0,4 Teile Benzoin (Entgasungsmittel) werden innig auf einem Henschel-Fluidmischervermischt, auf einem BUSS PLK 46 Extruder extrudiert, auf einer Hosohawa ACM 2-Mühle vermahlen und über ein 125 µm Sieb abgesiebt.
3. Herstellung der Dispersion
   In 400 Teile entsalztes Wasser werden 0,6 Teile Troykyd D777 (Entschäumer), 0,6 Teile Orotan 731 K (Dispergierhilfsmittel), 0,06 Teile Surfinol TMN 6 (Netzmittel) und 16,5 Teile RM8 (Rohm & Haas, nichtionischer Assoziativ-Verdicker auf Polyurethanbasis) dispergiert. Dann werden in kleinen Portionen 94 Teile des Pulverklarlackes eingerührt. Anschließend werden noch einmal 0,6 Teile Troykyd D777, 0,6 Teile Orotan731 K, 0,06 Teile Surfinol TMN 6 und 16,5 Teile RMB eindispergiert. Abschlie-Bend werden in kleinen Portionen 94 Teile des Pulverklarlackes eingerührt. Das Material wird in einer Sandmühle 3,5 h gemahlen. Die abschließend gemessene durchschnittliche Teilchengröße beträgt 4 µm. Das Material wird durch einen 50 µm Filter filtriert und abschließend werden 0,05 % Byk 345 (Verlaufsmittel) zugesetzt.
4. Applikation der Dispersion
   Die Slurry wird auf mit Wasserbasislack beschichteten Stahltafeln mittels einer Becherpistole appliziert. Das Blech wird 5 min bei Raumtemperatur und 5 min bei 60°C abgelüftet. Anschließend wird bei einer Temperatur von 140°C das Blech 30 min. eingebrannt.
   Bei 40 µm Schichtdicke wird ein hochglänzender Klarlack-Film mit MEK-Beständigkelt (> 100 Doppelhübe) hergestellt.
   Der Klarlack-Film weist eine gute Schwitzwasserbeständigkeit auf.

## Patentansprüche

1. Wäßrige Pulverklarlackdispersion aus einer festen, pulverförmigen Komponente A und einer wässrigen Komponente B, wobei
Komponente A ein Pulverklarlack ist, enthaltend
a) wenigstens ein epoxidhaltiges Bindemittel mit einem Gehalt von 30 bis 45 Gew.%, vorzugsweise 30 bis 35 Gew.% an glycidylhaltigen Monomeren mit einem Gehalt an vinylaromatischen Verbindungen, vorzugsweise Styrol,
b) wenigstens ein Vernetzungsmittel, und
c) ggf. Katalysatoren, Hilfsstoffe, pulverklarlacktypische Additive wie Entgasungsmittel, Verlaufsmittel, UV-Absorber, Radikalfänger, Antioxidantien
und
Komponente B. eine wässrige Dispersion ist, enthaltend
a) wenigstens einen Verdicker und
b) ggf. Katalysatoren, Hilfsstoffe, Entschäumungsmittel, Netzmittel, Dispersionshilfsmittel,
vorzugsweise carboxyfunktionelle Dispergiermittel, Antioxidantien, UV-Absorber,
Radikalfänger, Biozide, geringe Mengen Lösemittel, Verlaufsmittel, Neutralisierungsmittel, vorzugsweise Amine und/oder Wasserrückhaltemittel,
**dadurch gekennzeichnet, daß**
die Vernetzungsmittel geradkettige, aliphatische Dicarbonsäuren und/oder carboxyfunktionelle Polyester sind und Komponente Ba) ein nicht-ionischer Assoziativ-Verdicker ist, der als Strukturmerkmale
aa) ein hydrophiles Gerüst und
ab) hydrophobe Gruppen, die zu einer assoziative Wechselwirkung im wässrigen Medium fähig sind
enthält.

2. Wässrige Pulverklarlackdispersion nach Anspruch 1,
**dadurch gekennzeichnet, daß** deren pH-Wert zwischen 4,0 - 7,0, vorzugsweise 5,5 und 6,5 liegt.

3. Wässrige Pulverklarlackdispersion nach Anspruch 1 oder 2,
**dadurch gekennzeichnet, daß** deren Gehalt an vinylaromatischen Verbindungen höchstens 35, vorzugsweise 10 - 25 Gew.% beträgt, bezogen auf Komponente Aa).

4. Wässrige Pulverklarlackdispersion nach Anspruch 1 - 3,
**dadurch gekennzeichnet, daß** die epoxidfunktionellen Bindemittel epoxidgruppenhaltige Polyacrylatharze sind, wobei die eingesetzten epoxidfunktionellen Monomere vorzugsweise Glycidylacrylat, Glycidylmethacrylat und Allylglycidylether sind.

5. Wässrige Pulverklarlackdispersion nach Anspruch 1 - 4,
**dadurch gekennzeichnet, daß** die Korngröße höchstens 20 µm, vorzugsweise 3 bis 10 µm ist.

6. Wässrige Pulverklarlackdispersion nach einem der Ansprüche 1 bis 5,
**dadurch gekennzeichnet, daß** der nicht-ionische Assoziativ-Verdicker a) als hydrophiles Gerüst aa) Polyurethanketten enthält.

7. Wässrige Pulverklarlackdispersion nach Anspruch 6,
**dadurch gekennzeichnet, daß** der nicht-ionische Assoziativ-Verdicker a) als hydrophiles Gerüst aa) Polyurethanketten mit Polyetherbausteinen enthält

8. Verfahren zur Herstellung von wäßrigen Pulverlackdispersionen,
**dadurch gekennzeichnet, daß**
I. aus einer festen, pulverförmigen Komponente A und einer wässrigen Komponente B eine Dispersion hergestellt wird, wobei
die Komponente A ein Pulverklarlack ist enthaltend
a) wenigstens ein epoxidhaltiges Bindemittel mit einem Gehalt von 30 bis 45 Gew.%, vorzugsweise 30 bis 35 Gew.% an glycidylhaltigen Monomeren mit einem Gehalt an vinylaromatischen Verbindungen, vorzugsweise Styrol,
b) wenigstens ein Vernetzungsmittel, und
c) ggfs Katalysatoren, Hilfsstoffe, pulverklarlacktypische Additive, wie Entgasungsmittel, Verlaufsmittel, UV-Absorber, Radikalfänger, Antioxidantien
und
die Komponente B eine wässrige Dispersion ist enthaltend
a) wenigstens einen Verdicker und
b) ggf. Katalysatoren, Hilfsstoffe, Entschäumungsmittel, Dispersionshilfsmittel, Netzmittel, vorzugsweise carboxyfunktionelle Dispergiermittel, Antioxidantien, UV-Absorber, Verlaufshilfsmittel, Neutralisationsmittel, vorzugsweise Amine, Radikalfänger, geringe Mengen Lösemittel, Biozide und/oder Wasserrückhaltemittel,
wobei als Vernetzungsmittel geradkettige, aliphatische Dicarbonsäuren und/oder carboxyfunktionelle Polyester und als Komponente Ba) ein nicht-ionischer Verdicker eingesetzt wird,
II. die aus den Komponenten A und B hergestellte Dispersion ggf. vermahlen wird,
III. der pH-Wert der Dispersion auf 4,0 bis 7,0, vorzugsweise 5,5 bis 6,5 eingestellt und filtriert wird.

9. Verfahren nach Anspruch 8, **dadurch gekennzeichnet, daß** die wässrige Pulverklarlackdispersion aus den Komponenten A und B durch Naßvermahlung hergestellt wird.

10. Verwendung der wässrigen Pulverklarlackdispersion nach einem der Ansprüche 1-7 zur Beschichtung von lackierten und nicht lackierten Automobilkarosserien aus Metallblech und/oder Kunststoff mittels elektrostatisch unterstützter Hochrotation oder pneumatischer Applikation.

## Claims

1. Aqueous dispersion of a transparent powder coating, composed of a solid powder component A and an aqueous component B, where
component A is a transparent powder coating comprising
(a) at least one epoxy-containing binder having a content of glycidyl-containing monomers of from 30 to 45 %, preferably from 30 to 35 %, by weight and having a content of vinylaromatic compounds, preferably styrene,
(b) at least one crosslinking agent, and
(c) optionally catalysts, adjuvants, additives typical for transparent powder coatings, such as deaerating agents, levelling agents, UV absorbers, radical scavengers and antioxidants,
and
component B is an aqueous dispersion comprising
(a) at least one thickener, and
(b) optionally catalysts, adjuvants, defoamers, wetting agents, dispersion adjuvants, preferably carboxy-functional dispersants, antioxidants, UV absorbers, radical scavengers, biocides, small amounts of solvents, levelling agents, neutralizing agents, preferably amines and/or water-retaining agents,
**characterized in that** the crosslinking agents are straight-chain aliphatic dicarboxylic acids and/or carboxy-functional polyesters and component Ba) is a nonionic associative thickener containing as structural features
(aa) a hydrophilic framework and
(ab) hydrophobic groups, which are capable of associative interaction in the aqueous medium.

2. Aqueous dispersion of a transparent powder coating according to Claim 1, **characterized in that** its pH is between 4.0 - 7.0, preferably 5.5 and 6.5.

3. Aqueous dispersion of a transparent powder coating according to Claim 1 or 2, **characterized in that** its content of vinylaromatic compounds is at most 35 % by weight, preferably 10-25 % by weight, based on component Aa).

4. Aqueous dispersion of a transparent powder coating according to Claim 1 - 3, **characterized in that** the epoxy-functional binders are epoxy group-containing polyacrylate resins, where the epoxy-functional monomers employed are preferably glycidyl acrylate, glycidyl methacrylate and allyl glycidyl ether.

5. Aqueous dispersion of a transparent powder coating according to Claim 1 - 4, **characterized in that** the particle size is at most 20 µm, preferably from 3 to 10 µm.

6. Aqueous dispersion of a transparent powder coating according to one of Claims 1 to 5, **characterized in that** the nonionic associative thickener a) contains polyurethane chains as hydrophilic framework aa).

7. Aqueous dispersion of a transparent powder coating according to Claim 6, **characterized in that** the nonionic associative thickener a) contains polyurethane chains with polyether units as hydrophilic framework aa).

8. Process for preparing aqueous dispersions of a powder coating, **characterized in that**
I. a dispersion is prepared from a solid powder component A and an aqueous component B, where
component A is a transparent powder coating comprising
(a) at least one epoxy-containing binder having a content of glycidyl-containing monomers of from 30 to 45 %, preferably from 30 to 35 %, by weight and having a content of vinylaromatic compounds, preferably styrene,
(b) at least one crosslinking agent, and
(c) optionally catalysts, adjuvants, additives typical for transparent powder coatings, such as deaerating agents, levelling agents, UV absorbers, radical scavengers and antioxidants
and
component B is an aqueous dispersion comprising
(a) at least one thickener and
(b) optionally catalysts, adjuvants, defoamers, dispersion adjuvants, wetting agents, preferably carboxy-functional dispersants, antioxidants, UV absorbers, levelling adjuvants, neutralizing agents, preferably amines, radical scavengers, small amounts of solvents, biocides and/or water-retaining agents,
the crosslinking agents employed being straight-chain aliphatic dicarboxylic acids and/or carboxy-functional polyesters and component Ba) being a nonionic thickener,
II. the dispersion prepared from components A and B is optionally milled,
III. the pH of the dispersion is adjusted to from 4.0 to 7.0, preferably from 5.5 to 6.5, and filtered.

9. Process according to Claim 8, **characterized in that** the aqueous dispersion of a transparent powder coating is prepared from the components A and B by wet milling.

10. Use of the aqueous dispersion of a transparent. powder coating, according to one of Claims 1-7, for coating painted and unpainted vehicle bodies made of sheet metal and/or plastic by means of electrostatically assisted high-speed rotation or pneumatic application.

## Revendications

1. Dispersion aqueuse de vernis transparent pulvérulent constituée d'un composant solide pulvérulent A et d'un composant aqueux B, où
le composant A est un vernis transparent pulvérulent contenant
a) au moins un liant renfermant des groupes époxy ayant une teneur de 30 à 45% en poids, de préférence de 30 à 35% en poids de monomères glycidylés ayant une teneur en composés vinylaromatiques, de préférence le styrène,
b) au moins un agent de réticulation, et
c) éventuellement des catalyseurs, des auxiliaires, des additifs typiques de vernis transparents pulvérulents, tels que des agents de dégazage, des agents nivelants, des agents absorbant les UV, des capteurs de radicaux, des antioxydants,
et
le composant B est une dispersion aqueuse contenant
a) au moins un épaississant et
b) éventuellement des catalyseurs, des auxiliaires, des antimousses, des agents mouillants, des auxiliaires de dispersion,
de préférence des agents de dispersion à fonction carboxy, des antioxydants, des agents absorbant les UV,
des capteurs de radicaux, des biocides, de faibles quantités de solvants, des agents nivelants, des agents neutralisants, de préférence des amines et/ou des agents retenant l'eau,
**caractérisée en ce que**
les agents de réticulation sont des acides dicarboxyliques aliphatiques linéaires et/ou des polyesters à fonction carboxy et le composant Ba) est un épaississant associatif non ionique qui contient, en tant que caractéristiques structurales :
aa) un squelette hydrophobe et
ab) des groupes hydrophobes qui sont capables d'une interaction associative dans le milieu aqueux.

2. Dispersion aqueuse de vernis transparent pulvérulent selon la revendication 1, **caractérisée en ce que** son pH est compris entre 4,0 et 7,0, de préférence entre 5,5 et 6,5.

3. Dispersion aqueuse de vernis transparent pulvérulent selon la revendication 1 ou 2, **caractérisée en ce que** sa teneur en composés vinylaromatiques est au plus de 35, de préférence de 10-25% en poids, par rapport au composant Aa).

4. Dispersion aqueuse de vernis transparent pulvérulent selon les revendications 1-3, **caractérisée en ce que** les liants à fonction époxy sont des résines de polyacrylate renfermant des groupes époxy, les monomères à fonction époxy utilisés étant de préférence l'acrylate de glycidyle, le méthacrylate de glycidyle et l'éther allylglycidylique.

5. Dispersion aqueuse de vernis transparent pulvérulent selon les revendications 1-4, **caractérisée en ce que** la taille de particule est au plus de 20 µm, de préférence de 3 à 10 µm.

6. Dispersion aqueuse de vernis transparent pulvérulent selon d'une des revendications 1 à 5, **caractérisée en ce que** l'épaississant associatif non ionique a) contient des chaînes de polyuréthanne en tant que squelette hydrophile aa).

7. Dispersion aqueuse de vernis transparent pulvérulent selon la revendication 1, **caractérisée en ce que** l'épaississant associatif non ionique a) contient des chaînes de polyuréthanne ayant des motifs polyéther en tant que squelette hydrophile aa).

8. Procédé de préparation des dispersions aqueuses de vernis pulvérulent,
**caractérisé en ce que**
I. on prépare une dispersion à partir d'un composant solide pulvérulent A et d'un composant aqueux B, où le composant A est un vernis transparent pulvérulent contenant
a) au moins un liant renfermant des groupes époxy ayant une teneur de 30 à 45% en poids, de préférence de 30 à 35% en poids de monomères glycidylés ayant une teneur en composés vinylaromatiques, de préférence le styrène,
b) au moins un agent de réticulation, et
c) éventuellement des catalyseurs, des auxiliaires, des additifs typiques de vernis transparents pulvérulents, tels que des agents de dégazage, des agents nivelants, des agents absorbant les UV, des capteurs de radicaux, des antioxydants,
et
le composant B est une dispersion aqueuse contenant
a) au moins un épaississant et
b) éventuellement des catalyseurs, des auxiliaires, des antimousses, des auxiliaires de dispersion, des agents mouillants, de préférence des agents de dispersion à fonction carboxy, des antioxydants, des agents absorbant les UV, des agents auxiliaires nivelants, des agents neutralisants, de préférence des amines, des capteurs de radicaux, de faibles quantités de solvants, des biocides et/ou des agents retenant l'eau,
des acides dicarboxyliques aliphatiques linéaires et/ou des polyesters à fonction carboxy étant utilisés en tant qu'agents de réticulation et un épaississant non ionique étant utilisé en tant que composant Ba),
II. on broie éventuellement la dispersion préparée à partir des composants A et B,
III. on ajuste le pH de la dispersion entre 4,0 et 7,0, de préférence entre 5,5 et 6,5, et on la filtre.

9. Procédé selon la revendication 8, **caractérisé en ce que** la dispersion aqueuse de vernis transparent pulvérulent est préparée à partir des composants A et B par broyage à l'état mouillé.

10. Utilisation de la dispersion aqueuse de vernis transparent pulvérulent selon l'une quelconque des revendications 1-7 en vue du revêtement de carrosseries automobiles vernies et non vernies composées de tôle métallique et/ou de plastique, par rotation à vitesse rapide assistée par voie électrostatique ou par application pneumatique.
